# EUROPEAN PATENT APPLICATION

(11) **EP 1 895 426 A1**
(43) Date of publication of application: **05.03.2008**
(21) Application number: 06119581.4
(22) Date of filing: 25.08.2006
(51) Int. Cl.: G06F 13/38

(54) **Transmitter and transmitting system utilizing the same**

(71) Applicant: Ali Corporation, 114, Taipei (TW)
(72) Inventor: Xie, WuXong, Xiang District, Jhuhai City, Kuandong Pr (CN); Yang, Rui, 114,, Taipei (TW)
(74) Representative: Patentanwälte Kewitz & Kollegen

(57) **Abstract**

A transmitter comprising a register, a storage unit, and a transmitting unit is disclosed. The register stores a stop value. The storage unit stores a first data set and a second data set. The transmitting unit captures the first data set to a receiver. The transmitting unit waits a preset amount of time according to the stop value and then captures the second data set to the receiver.

## Description

### BACKGROUND OF THE INVENTION

### Field of the Invention

The invention relates to a transmitter, and more particularly to a transmitter with programmable delay time.

### Description of the Related Art

A transmitter is provided in a system on chip (SOC) for transmitting communication signals. The transmitter is typically a universal asynchronous receiver/transmitter (UART). In an SOC of a set top box (STB), a UART is employed in a conditional access (CA) system to serve as a smart card controller.

If the system utilizes a non-FIFO (first-in first-out) mode to transmit data set, the system requires a large amount of data set and interrupts. If the system utilizes a FIFO mode, when the UART transmits data set, a gap is required between two data sets.

A conventional data set comprises one or two stop bits. Thus, the duration of the gap is the duration of one or two stop bits. The smart card occasionally requires that the duration of the gap exceed the duration of two stop bits.

The conventional method utilizes software to control the duration of the gap between two data sets. When a CPU is in a busy state required to transmit a large amount of data set, it is already too late to transmit data set. Thus, the duration of the gap is longer such that a timeout problem occurs in the smart card and errors are generated.

### BRIEF SUMMARY OF THE INVENTION

Transmitters are provided. An exemplary embodiment of a transmitter comprises a register, a storage unit, and a transmitting unit. The register stores a stop value. The storage unit stores first data set and second data set. The transmitting unit captures the first data set to a receiver. The transmitting unit waits a preset amount of time according to the stop value and then captures the second data set to the receiver.

Transmission systems are also provided. An exemplary embodiment of a transmission system comprises a receiver and a transmitter. The transmitter, comprising a register, a storage mit, and a transmitting unit, transmits first data set and second data set to the receiver. The register stores a stop value. The storage unit stores first data set and second data set. The transmitting unit captures the first data set to a receiver. The transmitting unit waits a preset amount of time according to the stop value and then captures the second data set to the receiver.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

FIG. 1 is a schematic diagram of an exemplary embodiment of a transmitting system;

FIG. 2 is a data transmitting format; and

FIG. 3 is a schematic diagram of an exemplary embodiment of the transmitting unit.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

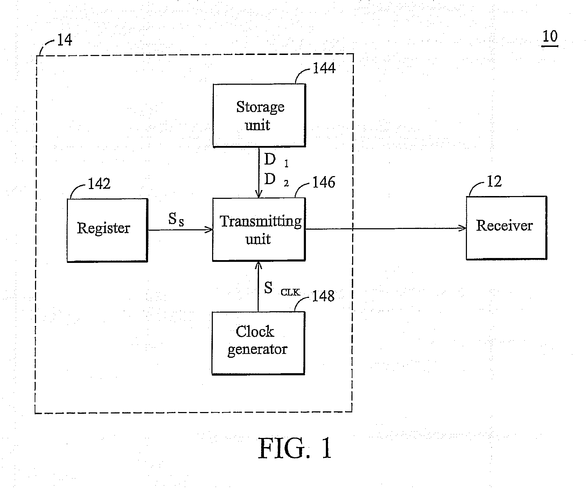

FIG. 1 is a schematic diagram of an exemplary embodiment of a transmitting system. Transmitting system 10 comprises a receiver 12 and a transmitter 14. Transmitter 14 transmits data set to receiver 12 and controls the duration of a gap between two data sets. In this embodiment, transmitter 14 is a universal asynchronous receiver/transmitter utilizing an asynchronous method to transmit data sets D₁ and D₂ to receiver 12. The gap between data sets D₁ and D₂ is controllable.

Transmitter 14 comprises a register 142, a storage unit 144, and a transmitting unit 146. Register 142 stores a stop value S_{S}. Storage unit 144 stores data sets D₁ and D₂. Transmitting unit 146 captures data set D₁ to receiver 12 and waits a preset amount of time according to stop value S_{S} and then captures data set D₂ to receiver 12.

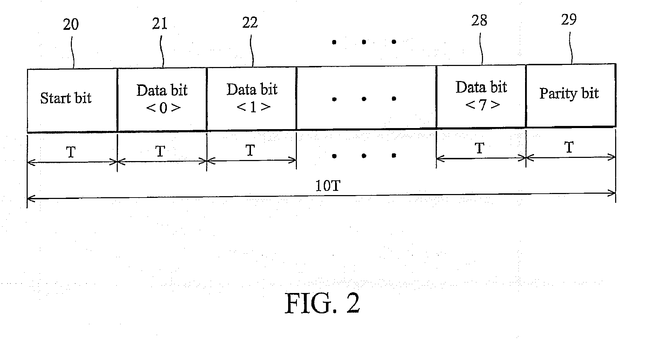

FIG. 2 shows a data transmission format. Data set D₁ or D₂ comprises a start bit 20, data bits 21~28, and a parity bit 29. The number of data bits is eight, but the invention is not limited thereto. The durations T of the bits are the same.

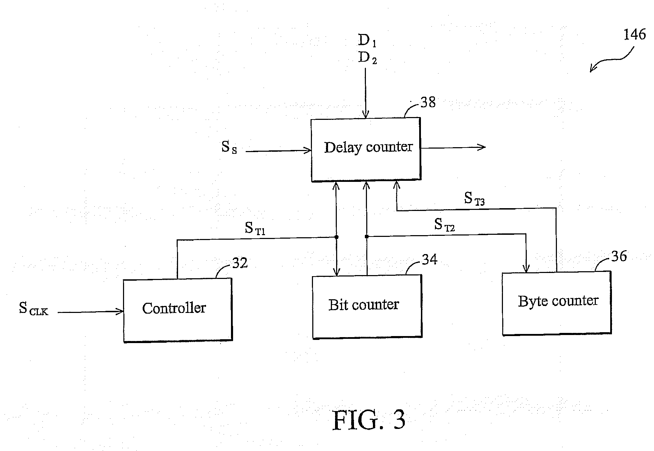

FIG. 3 is a schematic diagram of an exemplary embodiment of the transmitting unit. Transmitting unit 146 comprises a bit counter 32, a byte counter 34, a delay counter 36, and a controller 38.

Bit counter 32 counts according to a clock signal S_{CLK}. In this embodiment, clock signal S_{CLK} is generated by a clock generator 148. Bit counter 32 outputs a bit trigger signal S_{T1} to byte counter 34 and controller 38 when counting to a first preset value. When receiving bit trigger signal S_{T1}, controller 38 begins receiving the start bit 20 of data set D₁. In this embodiment, the duration which bit counter 32 counts to the first preset value is the duration T of one bit. Thus, when the start bit 20 is received by controller 38, bit counter 32 counts to the first preset value such that bit trigger signal S_{T1} is output again. When receiving bit trigger signal S_{T1} again, controller 38 captures the data bit 21 of data set D₁ and outputs the start bit 20 of data set D₁ to receiver 14.

When bit counter 32 outputs bit trigger signal S_{T1}, byte counter 34 begins counting. Byte counter 34 outputs a byte trigger signal S_{T2} for triggering delay counter 36 when counting to a second preset value. Controller 38 stops capturing data set stored in storage unit 144 according to byte trigger signal S_{T2}.

The duration which byte counter 34 counts to the second preset value is the duration 10T of data set D₁. When byte counter 34 counts to the second preset value, since all bits of data set D₁ are captured by controller 38 and transmitted to receiver 12, the capturing operation of controller 38 is halted.

Delay counter 36 starts to count when byte trigger signal S_{T2} is output from byte counter 34. When counting to a third preset value, delay counter 36 outputs a delay trigger signal S_{T3} such that controller 38 begins capturing data set D₂ stored in storage unit 144.

When receiving byte trigger signal S_{T2}, controller 38 stops capturing storage unit 144. When receiving delay trigger signal S_{T3}, controller 38 begins capturing storage unit 144. Thus, the duration which delay counter 36 counts to the third preset value is the stopping duration of controller 38.

Since the gap between two data sets can be programmed by transmitting unit 146 to conform to the requirements of the smart card and the transmitter does not require software for counting, consumption of system resources is reduced. The timeout problem of the smart card is additionally solved.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A transmitter, comprising:
a register storing a stop value;
a storage unit storing a first data set and a second data set; and
a transmitting unit capturing the first data set to a receiver, wherein the transmitting unit waits a preset amount of time according to the stop value and then captures the second data set to the receiver.

2. The transmitter as claimed in claim 1, wherein the first data set comprises ten bits and the second data set comprises ten bits.

3. The transmitter as claimed in claim 2, wherein the ten bits comprise a start bit, eight data bits and a parity bit.

4. The transmitter as claimed in claim 2, further comprising a clock generator for generating a clock signal.

5. The transmitter as claimed in claim 4, wherein the transmitting unit comprising:
a controller capturing the ten bits of the first data set to the receiver;
a bit counter counting according to the clock signal when the start bit of the first data set is captured by the controller, wherein the bit counter outputs a bit trigger signal when counting to a first preset value;
a byte counter counting according to the bit trigger signal, wherein the byte counter outputs a byte trigger signal when counting to a second preset value;
a delay counter counting according to the byte trigger signal, wherein the delay counter outputs a delay trigger signal to the controller when counting to the stop value and wherein the controller captures the ten bits of the second data set when receiving the delay trigger signal.

6. The transmitter as claimed in claim 5, wherein the controller utilizes an asynchronous method to transmit the first and the second data set.

7. The transmitter as claimed in claim 6, wherein the controller provides the captured bits to the receiver when the byte trigger signal is output from the byte counter.

8. The transmitter as claimed in claim 5, wherein the duration which the delay counter counts to the stop value is the waiting duration of the transmitting unit.

9. A transmission system, comprising:
a receiver; and
a transmitter transmitting a first data set and a second data set to the receiver and comprising:
a register storing a stop value;
a storage unit storing the first and the second data set; and
a transmitting unit capturing the first data set to the receiver, wherein the transmitting unit waits a preset amount of time according to the stop value and then captures the second data set to the receiver.

10. The transmission system as claimed in claim 9, wherein the first data set comprises ten bits and the second data set comprises ten bits.

11. The transmission system as claimed in claim 10, wherein the ten bits comprise a start bit, eight data bits and a parity bit.

12. The transmission system as claimed in claim 10, wherein further comprising a clock generator for generating a clock signal.

13. The transmission system as claimed in claim 12, wherein the transmitting unit comprising:
a controller capturing the ten bits of the first data set to the receiver;
a bit counter counting according to the clock signal when the start bit of the first data set is captured by the controller, wherein the bit counter outputs a bit trigger signal when counting to a first preset value;
a byte counter counting according to the bit trigger signal, wherein the byte counter outputs a byte trigger signal when counting to a second preset value;
a delay counter counting according to the byte trigger signal, wherein the delay counter outputs a delay trigger signal to the controller when counting to the stop value and wherein the controller captures the ten bits of the second data set when receiving the delay trigger signal.

14. The transmission system as claimed in claim 13, wherein the controller utilizes an asynchronous method to transmit the first and the second data set.

15. The transmission system as claimed in claim 14, wherein the controller provides the captured bits to the receiver when the byte trigger signal is output from the byte counter.

16. The transmission system as claimed in claim 14, wherein the transmitter is a universal asynchronous receiver/transmitter.

17. The transmission system as claimed in claim 14, wherein the duration which the delay counter counts to the stop value is the waiting duration of the transmitting unit.

## Amended claims

### Amended claims in accordance with Rule 137(2) EPC.

**1.** A transmitter, comprising:
a register storing a stop value;
a storage unit storing a first data set and a second data set, and
a transmitting unit capturing the first data set and transmitting it to a receiver, wherein the transmitting unit waits a preset amount of time according to the stop value and then captures the second data set to the receiver.

**2.** The transmitter as claimed in claim 1, wherein the first data set comprises ten bits and the second data set comprises ten bits.

**3.** The transmitter as claimed in claim 2, wherein the ten bits comprise a start bit, eight data bits and a parity bit.

**4.** The transmitter as claimed in claim 2, further comprising a clock generator for generating a clock signal.

**5.** The transmitter as claimed in claim 4, wherein the transmitting unit comprising:
a controller capturing the ten bits of the first data set and transmitting it to the receiver;
a bit counter counting according to the clock signal when the start bit of the first data set is captured by the controller, wherein the bit counter outputs a bit trigger signal when counting to a first preset value;
a byte counter counting according to the bit trigger signal, wherein the byte counter outputs a byte trigger signal when counting to a second preset value;
a delay counter counting according to the byte trigger signal, wherein the delay counter outputs a delay trigger signal to the controller when counting to the stop value and wherein the controller captures the ten bits of the second data set when receiving the delay trigger signal.

**6.** The transmitter as claimed in claim 5, wherein the controller utilizes an asynchronous method to transmit the first and the second data set.

**7.** The transmitter as claimed in claim 6, wherein the controller provides the captured bits to the receiver when the byte trigger signal is output from the byte counter.

**8.** The transmitter as claimed in claim 5, wherein the duration which the delay counter counts to the stop value is the waiting duration of the transmitting unit.

**9.** A transmission system, comprising:
a receiver; and
the transmitter as claimed in claim 1.

**10.** The transmission system as claimed in claim 9, wherein the first data set comprises ten bits and the second data set comprises ten bits.

**11.** The transmission system as claimed in claim 10, wherein the ten bits comprise a start bit, eight data bits and a parity bit.

**12.** The transmission system as claimed in claim 10, wherein further comprising a clock generator for generating a clock signal.

**13.** The transmission system as claimed in claim 12, wherein the transmitting unit comprising:
a controller capturing the ten bits of the first data set to the receiver;
a bit counter counting according to the clock signal when the start bit of the first data set is captured by the controller, wherein the bit counter outputs a bit trigger signal when counting to a first preset value;
a byte counter counting according to the bit trigger signal, wherein the byte counter outputs a byte trigger signal when counting to a second preset value;
a delay counter counting according to the byte trigger signal, wherein the delay counter outputs a delay trigger signal to the controller when counting to the stop value and wherein the controller captures the ten bits of the second data set when receiving the delay trigger signal.

**14.** The transmission system as claimed in claim 13, wherein the controller utilizes an asynchronous method to transmit the first and the second data set.

**15.** The transmission system as claimed in claim 14, wherein the controller provides the captured bits to the receiver when the byte trigger signal is output from the byte counter.

**16.** The transmission system as claimed in claim 14, wherein the transmitter is a universal asynchronous receiver/transmitter.

**17.** The transmission system as claimed in claim 14, wherein the duration which the delay counter counts to the stop value is the waiting duration of the transmitting unit.
